# EUROPÄISCHE PATENTSCHRIFT

(11) **EP 0 406 649 B1**
(45) Veröffentlichungstag und Bekanntmachung des Hinweises auf die Patenterteilung: **06.10.1993**
(21) Anmeldenummer: 90111955.2
(22) Anmeldetag: 23.06.1990
(51) Int. Cl.: F16H 57/04, F16N 19/00

(54) **Einrichtung zur Einstellung des Olstandes in einem Getriebe**
Oil level regulator for a gearbox
Dispositif de maintien du niveau d'huile dans une boîte de vitesses

(30) Priorität: 03.07.1989 US 374885
(43) Veröffentlichungstag der Anmeldung: 09.01.1991
(73) Patentinhaber: DEERE & COMPANY, Moline, Illinois 61265 (US)
(72) Erfinder: Marquart, Gordon LeRoy, Jesup, Iowa 50648 (US)
(74) Vertreter: Feldmann, Bernhard

(56) Entgegenhaltungen:
- EP-A- 0 159 105
- DE-C- 3 129 119
- FR-A- 1 595 259
- GB-A- 2 026 630
- GB-A- 2 033 025
- US-A- 2 595 738

## Beschreibung

Die Erfindung betrifft eine Einrichtung zur Einstellung des Ölstandes in einem Getriebe, welches wenigstens zwei getrennte Getriebegehäusekammern enthält, die teilweise mit Öl und teilweise mit Luft gefüllt sind und zwischen denen ein Ölaustausch möglich ist, wobei durch eine Pumpe ein erhöhter Druck in einer ersten, gegenüber der das Getriebe umgebenden Atmosphäre abgedichteten Getriebegehäusekammer aufgebaut wird, so daß Öl aus der ersten Getriebegehäusekammer verdrängt und durch einen Ölkanal, dessen Eintrittsöffnung unterhalb des Ölspiegels in der ersten Getriebegehäusekammer liegt, in wenigstens eine zweite Getriebegehäusekammer gedrückt wird.

Getriebegehäuse für Fahrzeuge, beispielsweise für landwirtschaftliche Schlepper, sind häufig in Abschnitte unterteilt, die unterschiedliche Getriebekomponenten aufnehmen. Beispielsweise wird häufig der Getriebeteil mit den Enduntersetzungszahnrädern und dem Differential durch eine Zwischenwand von dem Hauptwechselgetriebeteil getrennt.

Bei derartigen Gehäusen kann das Problem auftreten, daß in unerwünschter Weise Öl von einer Kammer in eine andere Kammer fließt, wenn sich beispielsweise das Fahrzeug auf einer Steigungsstrecke befindet. Hierdurch können unerwünscht hohe Ölniveaus in einem Teil des Gehäuses und unerwünscht niedrige Ölniveaus in anderen Teilen des Gehäuses, z. B. im Wechselgetriebeteil, hervorgerufen werden. Der Ölstand innerhalb eines Getriebegehäuses wird auch durch ölquellen in diesem Gehäuse beeinflußt. Als ölquellen kommen beispielsweise Betätigungseinrichtungen von Kupplungen oder automatischen Steuerungen in Betracht. Ein hoher ölstand im Wechselgetriebegehäuse verursacht jedoch bei den hier üblichen hohen Zahnraddrehzahlen unerwünscht hohe Planschverluste. Im Endantriebsgehäuse sind dagegen die Zahnraddrehzahlen nicht so hoch, so daß hier nicht mit so hohen Reibungsverlusten zu rechnen ist.

Es wurden verschiedene Maßnahmen vorgeschlagen, um derartige Probleme zu überwinden. Gemäß einer Maßnahme werden die in Frage stehenden beiden Gehäusehälften vollständig voneinander getrennt. Eine andere Maßnahme sieht eine Ölpumpe vor, durch die Öl von der Kammer, in der sich Öl sammelt, in die andere Kammer mit niedrigem Ölstand gepumpt wird. Eine derartige Ausführungsart geht beispielsweise aus der EP-A- 0 159 105 hervor. Diese hat jedoch den Nachteil, daß eine Verbindung mit relativ großem Durchmesser für den öldurchfluß erforderlich ist und daß das Öl dazu neigt, Verunreinigungen anzusammeln, die die Leitung verstopfen können.

Diese Probleme sind auch bei dem aus der GB-A-20 33 025 bekannten Schmiersystem für Fahrzeuggetriebe gegeben, bei dem eine Förderpumpe aus dem in einem Kupplungsgehäuse enthaltenen Schmierölbehälter ein Öl-Luft-Gemisch von ungefähr 60 % Öl und 40 % Luft ansaugt und einen Teil hiervon in das Hauptgetriebe fördert. Ein anderer Teil des Gemisches wird durch eine Schmiermittelleitung in zwei seitliche Endantriebsräume eines abgedichteten Ausgleichsgetriebes gefördert. Hier beginnen sich Luft und Öl zu entmischen und einen Luftdruck aufzubauen. Durch Überlauföffnungen, die auch einen Druckausgleich ermöglichen, gelangt das Öl von den Endantriebsräumen in einen mittleren Ausgleichsgetrieberaum wo es sich sammelt und mit zunehmendem Luftdruck über einen Überlauf und eine Rücklaufleitung zurück in den Schmierölbehälter gefördert wird.

Die mit der Erfindung zu lösende Aufgabe wird darin gesehen, ein System zum Ausgleichen des Ölstandes anzugeben, welches keine ölpumpe für die Förderung von Öl von einer Kammer in eine andere Kammer erfordert.

Die Aufgabe wird bei einer gattungsgemäßen Einrichtung durch die kennzeichnenden Merkmale des Patentanspruches 1 gelöst. Bei der ersten Getriebegehäusekammer handelt es sich um den Getriebeteil, in dem die Neigung zu einer Ölansammlung besteht und bei dem ein Ansteigen des Ölstandes vermieden werden soll. Sie beinhaltet beispielsweise das Wechselgetriebe eines Kraftfahrzeugantriebsstranges, während die zweite Getriebegehäusekammer, in die das Öl gedrückt wird, das Differentialgetriebe und den Endantrieb aufnimmt.

Erfindungsgemäß sind die gewöhnlich der Luft ausgesetzten Bereiche der beiden Getriebegehäusehälften durch wenigstens einen Luftkanal miteinander verbunden. In dem Luftkanal ist eine Luftpumpe angeordnet, die Luft aus der zweiten Getriebegehäusekammer durch den Luftkanal in die erste Getriebegehäusekammer treibt. Der hierdurch hervorgerufene Druckunterschied in den Getriebegehäusekammern drückt Öl aus der ersten Getriebegehäusekammer in die zweite Getriebegehäusekammer. Diese Lösung hat gegenüber einem Ansaugen der Luft aus der umliegenden Atmosphäre den Vorteil, daß das System geschlossen ist und keine Feuchte oder Verunreinigungen aus der Umgebung in das Getriebeinnere gelangen können.

Um einen ausreichenden Druckaufbau in der ersten Getriebegehäusekammer zu ermöglichen, ist diese im wesentlichen gegenüber der das Getriebe umgebenden Atmosphäre abgedichtet.

Die beiden Getriebegehäusekammern sind durch wenigstens einen Ölkanal miteinander verbunden, dessen Eintrittsöffnungen gewöhnlich unterhalb der Ölspiegel in den Getriebegehäusekammern liegen. Hierdurch kann vermieden werden, daß Luft durch den Ölkanal tritt und somit einen Druckausgleich herbeiführt.

In dem Ölkanal ist eine Dichtungseinrichtung vorgesehen, die zwar einen Öldurchtritt zuläßt, jedoch den Luftdurchtritt weitgehend verhindert. Diese Dichtungseinrichtung erhält vorzugsweise einen geschlossenen Ölfilm in dem Ölkanal aufrecht, der einen Luftdurchtritt verhindert, jedoch eine Ölströmung zuläßt.

Eine bevorzugte Ausgestaltung der Erfindung sieht vor, daß die Luftpumpe in der ersten Getriebegehäusekammer angeordnet ist. Sie befindet sich dabei vorzugsweise in einem zum Ölkanal entfernten Bereich und gewährleistet einen gleichmäßigen Druckaufbau in der Getriebegehäusekammer.

Zweckmäßigerweise wird die Luftpumpe durch eine Antriebswelle des Getriebes angetrieben, die sich in der Getriebegehäusekammer erstreckt. Bei der Luftpumpe handelt es sich vorzugsweise um eine Kolbenpumpe, die durch einen Exzenter der Antriebswelle angetrieben wird.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: eine schematische Darstellung eines Getriebes mit einer erfindungsgemäßen Luft-Öl-Höhenausgleichsvorrichtung,
- Fig. 2: eine detailliertere Darstellung des Luftpumpenbereiches aus Fig. 1 und
- Fig. 3: eine detailliertere Darstellung des Ölkanalbereiches aus Fig. 1.

Das Getriebe 10 enthält eine erste Getriebegehäusekammer 12, welche ein Hauptwechselgetriebe 14 aufnimmt, und eine zweite Getriebegehäusekammer 16, welche ein Enduntersetzungsgetriebe und ein Differential aufnimmt, die mit dem Bezugszeichen 18 belegt wurden. Beide Getriebegehäusehälften 12, 16 sind durch eine Zwischenwand voneinander getrennt. Öl, jedoch nicht Luft, kann durch einen Ölkanal 20, der die beiden Gehäusekammern 12, 16 miteinander verbindet, fließen. Schleuderkräfte, die durch die Drehung des Differentialgetriebes 18 erzeugt werden, versuchen Öl aus der zweiten Gehäusekammer 16 in die erste Gehäusekammer 12 zu treiben, wodurch der Ölspiegel 22 in der ersten Gehäusekammer 12 auf Kosten des Ölspiegels 24 in der zweiten Gehäusekammer 16 ansteigen würde.

Ein Luftkanal 26 verbindet einen oberen, normalerweise mit Luft gefüllten Teil der zweiten Gehäusekammer 16 mit einer Luftpumpe 28, welche in dem oberen, normalerweise mit Luft gefüllten Teil der ersten Gehäusekammer 12 angeordnet ist. Die genaue Lage des Luftkanales 26 kann den Montageanforderungen entsprechend variiert werden und wurde hier lediglich schematisch angedeutet.

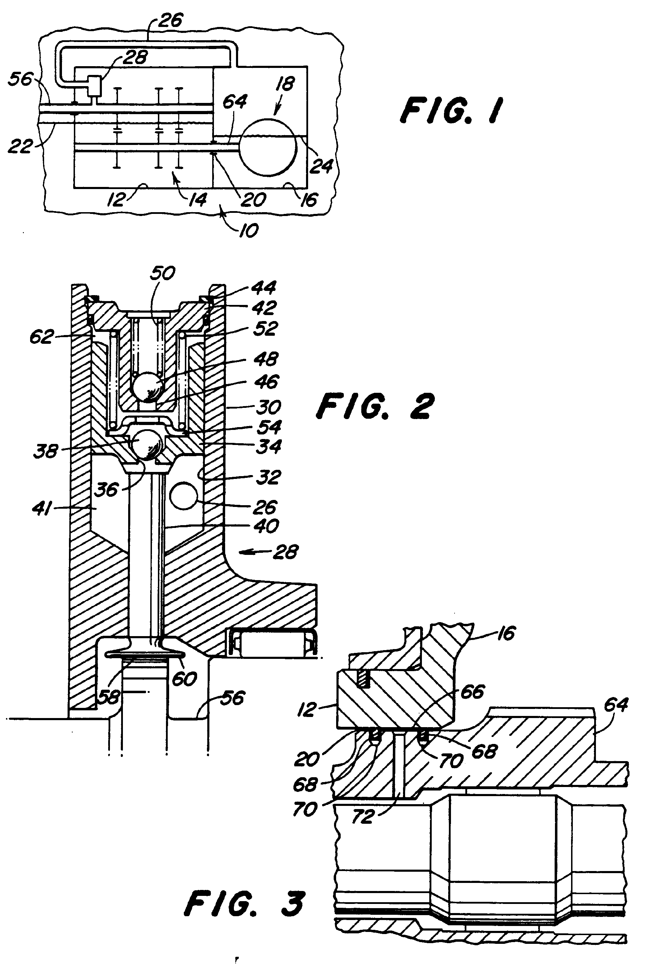

In Fig. 2 ist die Luftpumpe 28 detaillierter als in Fig. 1 dargestellt. Auch wenn grundsätzlich jede Art von Luftpumpe verwendet werden kann, findet vorzugsweise eine einfache kolbenbetätigte und durch einen Nocken 58 der Getriebeantriebswelle 56 angetriebene Pumpe Verwendung. Die dargestellte Luftpumpe 28 weist ein Pumpengehäuse 30 mit einer darin befindlichen zentralen Kolbenbohrung 32 auf. In der Kolbenbohrung 32 ist ein Kolben 34 gleitbar angeordnet, der ein Absperrventil, bestehend aus einer durch eine Verschlußkugel 38 verschließbaren Öffnung 36, aufweist und zur Übertragung der Gleitbewegung mit einer Kolbenstange 40 verbunden ist. Der Kolben 34, die Kolbenstange 40 und die Kolbenbohrung 32 schließen eine kolbenstangenseitige Kammer 41 ein, die mit dem Luftkanal 26 verbunden ist. Eine Endkappe 42 wird durch einen Sprengring 44 auf der der kolbenstangenseitigen Kammer 41 gegenüberliegenden Seite des Kolbens 34 in der Kolbenbohrung 32 gehalten. An Stelle des Sprengringes 44 kann zur Befestigung der Endkappe 42 auch eine Schraubverbindung oder ein anderes geeignetes Mittel Verwendung finden. Die Endkappe 42 enthält ein Absperrventil, bestehend aus einer durch eine Verschlußkugel 48 verschließbaren zentralen Öffnung 46. Durch eine Feder 50 wird die Verschlußkugel 48 der Endkappe 42 in eine die Öffnung 46 verschließende Lage gedrückt. Eine weitere Feder 52 hält einen Verschlußkugelanschlag 54 in einer solchen Lage, daß verhindert wird, daß die Verschlußkugel 38 des Kolbens 34 sich zu weit von der Kolbenöffnung 36 wegbewegt. Die weitere Feder 52 drückt gleichzeitig den Kolben 34 innerhalb der Kolbenbohrung 32 in Richtung Kolbenstangenende. Schließlich ist eine Antriebswelle 56 des Getriebes mit einer Exzenteroberfläche 58 versehen, auf der das dem Kolben 34 gegenüberliegende Ende 60 der Kolbenstange 40 entlanggleitet.

Durch die Drehung der Antriebswelle 56, und damit der Exzenteroberfläche 58, wird infolge der Gegenkraft der Feder 52 der Kolben 34 innerhalb der Kolbenbohrung 32 auf und ab bewegt. Bewegt sich der Kolben 34 nach oben, so wird durch den Luftkanal 26 Luft aus der zweiten Getriebegehäusekammer 16 in die kolbenstangenseitige Kammer 41 angesaugt. Die Druckdifferenz und Zentrifugalkraft, die durch diese Bewegung auf die Verschlußkugel 38 ausgeübt werden, ziehen die Verschlußkugel 38 in eine Lage, in der die Kolbenöffnung 36 verschlossen wird. Aufgrund einer Bewegung des Kolbens 34 nach unten wird das Absperrventil 36, 38 durch die Druckdifferenz zwischen der kolbenstangenseitigen Kammer 41 und der Zylinderendkammer 62 geöffnet und Luft in die Zylinderendkammer 62 der Pumpe eingesaugt. Hierbei wird durch die Feder 50 und den Druck in der Getriebegehäusekammer 12, der an der oberen freien Öffnung des Pumpengehäuses 30 ansteht, das Absperrventil 46, 48 geschlossen gehalten. Wenn der Arbeitstakt wiederholt wird, überschreitet bei Aufwärtsbewegung des Kolbens 34 der Luftdruck in der Zylinderendkammer 62 den erforderlichen Öffnungsdruck des Absperrventils 46, 48, so daß das Absperrventil 46, 48 geöffnet wird. Hierbei wird Luft in die erste Getriebegehäusekammer 12 getrieben, wodurch diese Kammer 12 unter Druck gesetzt wird. Für einen sachgemäßen Arbeitsablauf sollte die erste Getriebegehäusekammer 12 gegen Atmosphäre abgedichtet sein. Die zweite Getriebegehäusekammer 16 kann hingegen durch einen Überlauf mit einem Ölsumpf in Verbindung stehen.

In Fig. 3 ist eine Anordnung für einen Ölkanal dargestellt, der zwar den Öldurchtritt, nicht jedoch einen Luftdurchtritt zwischen den Getriebegehäusekammern 12, 16 erlaubt. Der Ölkanal 20 wird durch den Zwischenraum zwischen einer Antriebswelle 64, welche sich von der ersten Getriebegehäusekammer 12 in die zweite Getriebegehäusekammer 16 erstreckt, und der Wandung 66 der Durchtrittsöffnung, durch die sich die Antriebswelle 64 erstreckt, gebildet. Zwei Dichtungsringe 68 sind in Nuten 70 der Antriebswelle 64 angeordnet. Über einen Ölkanal 72 wird Öl zwischen die Dichtungsringe 68 geleitet, um hier einen Ölfilm zu bilden. Dieser Ölfilm ermöglicht es zwar dem Öl, von einer Kammer 12, 16 in die andere zu fließen, jedoch wird Luft an einem Durchtritt gehindert.

## Patentansprüche

1. Einrichtung zur Einstellung des Ölstandes in einem Getriebe (10), welches wenigstens zwei getrennte Getriebegehäusekammern (12, 16) enthält, die teilweise mit Öl und teilweise mit Luft gefüllt sind, und zwischen denen ein Ölaustausch möglich ist, wobei durch eine Pumpe ein erhöhter Druck in einer ersten, gegenüber der das Getriebe (10) umgebenden Atmosphäre abgedichteten Getriebegehäusekammer (12) aufgebaut wird, so daß Öl aus der ersten Getriebegehäusekammer (12) verdrängt und durch einen Ölkanal (20), dessen Eintrittsöffnung unterhalb des Ölspiegels (22) in der ersten Getriebegehäusekammer (12) liegt, in wenigstens eine zweite Getriebegehäusekammer (16) gedrückt wird, dadurch gekennzeichnet, daß die gewöhnlich der Luft ausgesetzten Bereiche der beiden Getriebegehäusekammern (12, 16) durch wenigstens einen Luftkanal (26) miteinander verbunden sind, daß in dem Luftkanal (26) eine Luftpumpe (28) angeordnet ist und daß in dem Ölkanal (20) eine Dichtungseinrichtung (68) vorgesehen ist, die zwar einen Öldurchtritt zuläßt, jedoch den Luftdurchtritt weitgehend verhindert.

2. Einrichtung nach Anspruch 1, dadurch gekennzeichnet, daß sich eine Antriebswelle (64) des Getriebes (10) von der ersten in die zweite Getriebegehäusekammer (12, 16) durch den Ölkanal (20) erstreckt.

3. Einrichtung nach Anspruch 1 oder 2, dadurch gekennzeichnet, daß die Dichtungseinrichtung (68) einen Ölfilm zwischen der Wandung (66) des Ölkanales (20) und der Antriebswelle (64) einschließt.

4. Einrichtung nach Anspruch 2 oder 3, dadurch gekennzeichnet, daß zwischen der Antriebswelle (64) und der Wandung (66) des Ölkanales (20) wenigstens zwei axial zueinander beabstandete Dichtungen (68) vorgesehen sind, zwischen die Öl eingeleitet wird.

5. Einrichtung nach einem der Ansprüche 1 bis 4, dadurch gekennzeichnet, daß die erste Getriebegehäusekammer (12) ein Hauptwechselgetriebe (14) und die zweite Getriebegehäusekammer (16) ein Differentialgetriebe (18) aufnehmen.

6. Einrichtung nach einem der Ansprüche 1 bis 5, dadurch gekennzeichnet, daß die Luftpumpe (28) in der ersten Getriebegehäusekammer (12) angeordnet ist.

7. Einrichtung nach einem der Ansprüche 1 bis 6, dadurch gekennzeichnet, daß die Luftpumpe (28) sich in der Getriebegehäusekammer (12) in einem zum Ölkanal (20) entfernten Bereich befindet.

8. Einrichtung nach einem der Ansprüche 1 bis 7, dadurch gekennzeichnet, daß die Luftpumpe (28) durch eine sich in der Getriebegehäusekammer (12) erstreckende Antriebswelle (56) antreibbar ist.

9. Einrichtung nach einem der Ansprüche 1 bis 8, dadurch gekennzeichnet, daß die Luftpumpe (28) für ihren Antrieb einen Nockenstößel aufweist, der mit einer Exzenteroberfläche (58) der Antriebswelle (64) in Eingriff steht.

10. Einrichtung nach einem der Ansprüche 1 bis 9, gekennzeichnet durch eine Luftpumpe (28) mit
- einem Zylinder (32), in dem ein Kolben (34) gleitbar gelagert ist und der mit dem Kolben (34) eine Zylinderkammer (62) einschließt,
- einem ersten Absperrventil (36, 38), das zwischen der Zylinderkammer (62) und dem Luftkanal (26) liegt und eine Luftströmung von dem Luftkanal (26) zur Zylinderkammer zuläßt, jedoch nicht in umgekehrter Richtung,
- einem zweiten Absperrventil (46, 48), das zwischen der Zylinderkammer (62) und einem Durchtritt zur ersten Getriebegehäusekammer (12) liegt, gewöhnlich dem Luftdruck in der ersten Gehäusekammer (12) ausgesetzt ist und lediglich einen Luftdurchtritt von der Zylinderkammer (62) zur ersten Getriebegehäusekammer (12), nicht jedoch in entgegengesetzter Richtung zuläßt und
- einer Kolbenstange (40), die den Kolben (34) mit einem mit einer Nockenoberfläche (58) einer Antriebswelle (56) in Eingriff stehenden Nockenfolger (60) verbindet, so daß der Kolben (34) in dem Zylinder (32) beim Drehen der Antriebswelle (56) hin und her verschoben wird.

11. Einrichtung nach Anspruch 10, dadurch gekennzeichnet, daß der Kolben (34) durch eine erste Feder (52) in Richtung Nockenoberfläche (58) der Antriebswelle (56) gedrückt wird und daß das zweite Absperrventil (46, 48) durch eine zweite Feder (50) in seine geschlossene Stellung gedrückt wird.

## Claims

1. Device for regulating the oil level in a gearbox (10), which includes at least two separate gearcase chambers (12, 16), which are filled partly with oil and partly with air, and between which an interchange of oil is possible, an increased pressure being built up by a pump in a first gearcase chamber (12) which is sealed off from the atmosphere surrounding the gearbox (10), so that oil is forced out of the first gearcase chamber (12) and through an oil duct (20) whose inlet opening lies below the oil level (22) in the first gearcase chamber (12) into at least one second gearcase chamber (16), characterised in that the regions of the two gearcase chambers (12, 16) normally exposed to the air communicate with one another through at least one air duct (26), in that an air pump is disposed in the air duct (26), and in that there is provided in the oil duct (20) a seal device (68) which, while permitting passage of oil, yet substantially prevents the passage of air.

2. Device according to claim 1, characterised in that a drive shaft (64) of the gearbox (10) extends from the first into the second gearcase chamber (12, 16) through the oil duct (20).

3. Device according to claim 1 or 2, characterised in that the seal device (68) encloses an oil film between the wall (66) of the oil duct (20) and the drive shaft (64).

4. Device according to claim 2 or 3, characterised in that at least two seals (68), spaced axially apart from one another, are provided between the drive shaft (64) and the wall (66) of the oil duct (20), oil being introduced between said seals (68).

5. Device according to one of claims 1 to 4, characterised in that the first gearcase chamber (12) accommodates a main gear-change system (14), and the second gearcase chamber (16) a differential gear system (18).

6. Device according to one of claims 1 to 5, characterised in that the air pump (28) is disposed in the first gearcase chamber (12).

7. Device according to one of claims 1 to 6, characterised in that the air pump (28) is located in the gearcase chamber (12) in a region remote from the oil duct (20).

8. Device according to one of claims 1 to 7, characterised in that the air pump (28) may be driven by a drive shaft (56) extending in the gearcase chamber (12).

9. Device according to one of claims 1 to 8, characterised in that the air pump (28) has for its propulsion a cam follower which is in engagement with an eccentric face (58) of the drive shaft (64).

10. Device according to one of claims 1 to 9, characterised by an air pump (28) with
- a cylinder (32) in which a piston (34) is slidably mounted, and which along with the piston (34) encloses a cylinder chamber (62),
- a first blocking valve (36, 38) lying between the cylinder chamber (62) and the air duct (26), permitting an airflow from the air duct (26) to the cylinder chamber, yet not in the reverse direction,
- a second blocking valve (46, 48), lying between the cylinder chamber (62) and a passage to the first gearcase chamber (12), is normally exposed to the air-pressure in the first gearcase chamber (12), and permits passage of air only from the cylinder chamber (62) to the first gearcase chamber (12), but not in the reverse direction, and
- a piston rod (40) connecting the piston (34) with a cam follower (60) which is in turn in engagement with a cam face (58) of a drive shaft (56), so that the piston (34) is displaced to and fro in the cylinder (32) upon rotation of the drive shaft (56).

11. Device according to claim 10, characterised in that the piston (34) is pressed by a first spring (52) in the direction of the cam face (58) of the drive shaft (56), and in that the second blocking valve (46, 48) is pressed into its closed position by a second spring (50).

## Revendications

1. Dispositif de réglage du niveau d'huile dans une transmission (10) comprenant au moins deux compartiments séparés de carter de transmission (12, 16), qui sont remplis en partie d'huile et en partie d'air et entre lesquels peut avoir lieu un échange d'huile, une pompe produisant une pression accrue dans un premier compartiment de carter de transmission (12), étanché vis-à-vis de l'atmosphère entourant la transmission (10), de sorte que de l'huile est délogée du premier compartiment de carter de transmission (12) et refoulée, par un canal d'huile (20) dont l'ouverture d'entrée se trouve en dessous du niveau d'huile (22) dans le premier compartiment de carter de transmission (12), dans au moins un second compartimment de carter de transmission (16), caractérisé en ce que les régions des deux compartiments de carter de transmission (12, 16) qui sont habituellement exposées à l'air sont mutuellement reliées par au moins un canal d'air (26), en ce qu'une pompe à air (28) est disposée dans le canal d'air (26), et en ce qu'un dispositif d'étanchement (68) est prévu dans le canal d'huile (20), dispositif qui, s'il autorise le passage d'huile, empêche pour l'essentiel le passage d'air.

2. Dispositif selon la revendication 1, caractérisé en ce qu'un arbre de transmission secondaire (64) de la transmission (10) s'étend du premier dans le second compartiment de carter de transmission (12, 16) en passant par le canal d'huile (20).

3. Dispositif selon la revendication 1 ou 2, caractérisé en ce que le dispositif d'étanchement (68) retient un film d'huile entre la paroi (66) du canal d'huile (20) et l'arbre de transmission secondaire (64).

4. Dispositif selon la revendication 2 ou 3, caractérisé en ce qu'au moins deux joints d'étanchéité axialement distants (68), entre lesquels on introduit de l'huile, sont prévus entre l'arbre de transmission secondaire (64) et la paroi (66) du canal d'huile (20).

5. Dispositif selon l'une quelconque des revendications 1 à 4, caractérisé en ce que le premier compartiment de carter de transmission (12) reçoit une boîte de vitesses principale (14) et le second compartiment de carter de transmission (16) reçoit un différentiel (18).

6. Dispositif selon l'une quelconque des revendications 1 à 5, caractérisé en ce que la pompe à air (28) est disposée dans le premier compartiment de carter de transmission (12).

7. Dispositif selon l'une quelconque des revendications 1 à 6, caractérisé en ce que la pompe à air (28) se trouve dans une région du compartiment de carter de transmission (12) qui est éloignée du canal d'huile (20).

8. Dispositif selon l'une quelconque des revendications 1 à 7, caractérisé en ce que la pompe à air (28) peut être entraînée par un arbre de transmission primaire (56) s'étendant dans le compartiment de carter de transmission (12).

9. Dispositif selon l'une quelconque des revendications 1 à 8, caractérisé en ce que la pompe à air (28) présente, pour son entraînement, une contre-came qui est en prise avec une surface excentrique (58) de l'arbre de transmission primaire (56).

10. Dispositif selon l'une quelconque des revendications 1 à 9, caractérisé par une pompe à air (28) comportant :
- un cylindre (32), dans lequel est monté coulissant un piston (34) et qui enferme avec le piston (34) une chambre de cylindre (62),
- une première soupape d'isolement (36, 38), qui se trouve entre la chambre de cylindre (62) et le canal d'air (26) et autorise un écoulement d'air du canal d'air (26) vers la chambre de cylindre, mais non en direction inverse,
- une seconde soupape d'isolement (46, 48), qui se trouve entre la chambre de cylindre (62) et un passage vers le premier compartiment de carter de transmission (12), est habituellement exposée à la pression d'air dans le premier compartiment de carter (12) et autorise uniquement un passage d'air de la chambre de cylindre (62) vers le premier compartiment de carter de transmission (12), mais non en direction opposée, et
- une tige de piston (40), qui relie le piston (34) à une contre-came (60) en prise avec une surface de came (58) d'un arbre de transmission primaire (56), de sorte que le piston (34) est déplacé en va-et-vient lors de la rotation de l'arbre de transmission primaire (56).

11. Dispositif selon la revendication 10, caractérisé en ce que le piston (34) est pressé par un premier ressort (52) en direction de la surface de came (58) de l'arbre de transmission primaire (56), et en ce que la seconde soupape d'isolement (46, 48) est pressée dans sa position fermée par un second ressort (50).
